(19) Europäisches Patentamt

European Patent Office

Office européen des brevets

(11) **EP 1 286 415 B1**

(12) **EUROPÄISCHE PATENTSCHRIFT**

(45) Veröffentlichungstag und Bekanntmachung des Hinweises auf die Patenterteilung:
**10.08.2005  Patentblatt 2005/32**

(51) Int Cl.[7]: **G01S 7/285**, H01Q 3/26

(21) Anmeldenummer: **02014487.9**

(22) Anmeldetag: **29.06.2002**

(54) **Verfahren zur Unterdrückung von Jammer-Signalen**

Method for suppressing jammer signals

Procédé de suppression de signaux de brouillage

(84) Benannte Vertragsstaaten:
**DE FR GB SE**

(30) Priorität: **17.08.2001  DE 10140498**

(43) Veröffentlichungstag der Anmeldung:
**26.02.2003  Patentblatt 2003/09**

(73) Patentinhaber: **EADS Deutschland GmbH**
**85521 Ottobrunn (DE)**

(72) Erfinder:
- **Hofele, Franz-Xaver**
  **73072 Donzdorf (DE)**
- **Schmitt, Klaus-Peter, Dr.**
  **89287 Bellenberg (DE)**
- **Nagel, Dieter, Dr.**
  **89155 Erbach (DE)**
- **Rothmaier, Markus**
  **89173 Lonsee (DE)**

(74) Vertreter: **Meel, Thomas**
**Patentassessor,**
**c/o Dornier GmbH**
**L H G**
**88039 Friedrichshafen (DE)**

(56) Entgegenhaltungen:
**US-A- 4 672 378          US-A- 4 720 712**
**US-A- 5 841 395**

- **HIROOMI HIKAWA ET AL: "JAMMING CANCELER USING INTERPOLATED FFT" INTERNATIONAL CONFERENCE ON COMMUNICATIONS. INCLUDING SUPERCOMM TECHNICAL SESSIONS. ATLANTA, APR. 15 - 19, 1990, NEW YORK, IEEE, US, Bd. 4, 15. April 1990 (1990-04-15), Seiten 1275-1279, XP000146018**
- **APPLEBAUM S P: "Adaptive arrays" IEEE TRANSACTIONS ON ANTENNAS AND PROPAGATION, SEPT. 1976, USA, Bd. AP-24, Nr. 5, Seiten 585-598, XP009021046 ISSN: 0018-926X**

**Beschreibung**

Die Erfindung betrifft ein Verfahren zur Unterdrückung von Jammer-Signalen, im Empfangssignal von Radarantennen von HPRF-Anwendungen (high pulse repetition frequency, hohe Pulsrepetitionsfrequenz) gemäß dem Oberbegriff des Patentanspruchs 1.

In der Radartechnik auftretende Störsignale werden in gewollte und ungewollte Störsignale unterschieden. Unter gewollten Störsignalen versteht man das Jammer-Signal. Hierbei kann insbesondere im militärischen Bereich zum Schutz des Ziels vor Ortung und Verfolgung eine gewollte Störung (Jammer-Signal) durch eine elektronische Gegenmaßnahme erwünscht sein. Dazu sendet das Ziel Stör- und Täuschsignale aus, die sich am Radargerät mit den Nutzsignalen überlagern, was zu Fehlinformationen über das Ziel und als Folge davon zu verkehrten Maßnahmen beim Gegner führen soll.

Unter ungewollten Störsignalen, auch als Clutter-Signale bezeichnet, versteht man im allgemeinen Signale, welche durch Reflexion bzw. Streuung z.B. von auf die Erdoberfläche eingestrahlter Energie entstehen.

Das Jammer-Signal wird hauptsächlich über die Nebenkeulen, im weiteren als Sidelobe bezeichnet, der Radarantenne eingefangen und ist aufgrund der $1/R^2$-Gesetzmäßigkeit relativ stark. Um dieses, auch als Sidelobe-Jammer bezeichnete Signal zu unterdrücken; wird ein Adaptive Sidelobe Cancellor verwendet [1]. Dieser Adaptive Sidelobe Cancellor basiert auf der Existenz eines Summen-, Differenz- und Hilfskanals der Radarantenne, wobei der Hilfskanal ein isotropes Antennendiagramm, insbesondere 30-40 dB unter dem Maximum der Hauptkeule der Antenne, besitzt.

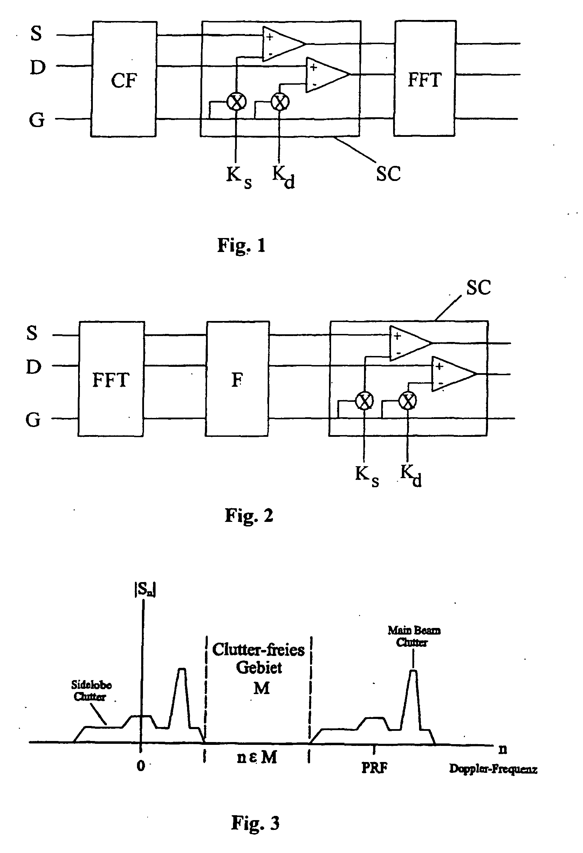

Fig. 1 zeigt ein bekanntes Verfahren zur Unterdrückung des Sidelobe-Jammers. Das von der Radarantenne empfangene Signal liegt bekanntermaßen im Zeitbereich vor. In der weiteren Signalverarbeitung wird der Summen- S, Differenz- D und Hilfskanal G einem rekursiven Clutter-Filter CF zugeführt, welches das Clutter-Signal unterdrückt. Anschließend wird für die drei Kanäle S, D, G eine Sidelobe Cancellation mittels eines Sidelobe Cancellers SC durchgeführt. Abschließend wird in dem bekannten Verfahren die Signale der drei Kanäle S, D, G in einer Fast Fourier Transformation (FFT) vom Zeitbereich in den Frequenzbereich transformiert.

Zur Berechnung einer FFT werden üblicherweise Signal-Prozessoren mit einer Floating-Point-Arithmetik verwendet, wodurch eine genauere Berechnung der FFT möglich ist, als mit Fix-Point-Prozessoren.

Als nachteilig erweist sich allerdings die Verwendung eines aufwendigen rekursiven Clutter-Filters bei anschließender FFT. Außerdem ist dieses Verfahren sehr träge und kann nur langsam auf Änderungen des Sidelobe-Jammers reagieren.

Aufgabe der Erfindung ist es, ein Verfahren anzugeben, mit dem eine gegenüber dem Stand der Technik einfachere und schnellere Unterdrückung des Sidelobe-Jammers möglich ist.

Diese Aufgabe wird mit dem Verfahren gemäß Patentanspruch 1 gelöst. Vorteilhafte Ausführungen der Erfindung sind Gegenstand von Unteransprüchen.

Erfindungsgemäß wird das von der Radarantenne empfangene Signal zunächst im Summen-, Differenz- und Hilfskanal in einer Fast Fourier Transformation vom Zeitbereich in den Frequenzbereich transformiert. Anschließend wird im Frequenzbereich das Jammer-Signal, insbesondere das Sidelobe-Jammer, mittels Sidelobe Cancellation unterdrückt.

Der Vorteil hierbei ist, dass im Frequenzbereich die Verarbeitung der Signale im Sidelobe-Canceller einfacher und schneller erfolgen kann, als es im Zeitbereich gemäß dem Stand der Technik möglich ist. Ein weiterer Vorteil des erfindungsgemäßen Verfahrens ist, dass keine komplizierten rekursiven Clutter-Filter benötigt werden.

Die Erfindung wird im weiteren unter Hinzunahme von Zeichnungen näher erläutert. Es zeigen:

Fig. 1 ein Verfahren zur Unterdrückung des Sidelobe-Jammers mittels Sidelobe Cancellation gemäß dem Stand der Technik,

Fig. 2 das erfindungsgemäße Verfahren zur Unterdrückung des Sidelobe-Jammers mittels Sidelobe Cancellation, wobei die FFT vor der Sidelobe-Cancellation durchgeführt wird,

Fig. 3 beispielhaft für den Summenkanal $S_n$ ein stark vereinfacht dargestelltes Frequenzspektrum in einer HPRF-Situation mit einem clutterfreien Bereich,

Fig. 4 einen für die FFT in Sub-Bursts unterteilten Burst mit einer, das erfindungsgemäße Verfahren einleitenden Initialisierungsphase,

Fig. 5 eine beispielhafte Darstellung zur Veranschaulichung der Zusammenfassung der einzelnen Sub-Bursts.

Fig. 2 zeigt das erfindungsgemäße Verfahren zur Unterdrückung des Jammer-Signals mittels Sidelobe Cancellation. Die Signale aus dem Summen- S, Differenz- D und Hilfskanal G werden in einer FFT vom Zeitbereich in den Frequenzbereich transformiert. Anschließend kann in einer vorteilhaften Ausführung der Erfindung in den drei Kanälen S, D, G das Clutter-Signal, welches im Frequenzbereich $\pm 2V_r/\lambda$ mit $V_r$ der Geschwindigkeit der HPRF-Anwendung und mit $\lambda$ der Wellenlänge des Empfangssignals vorliegt, in einem einfachen Filter F herausgeschnitten werden. Dann werden die Signale S, D, G einem Sidelobe Canceller SC zugeführt in dem der Sidelobe-Jammer unterdrückt wird. Für die Berechnungen werden Skalierungsfaktoren $K_s$ und $K_d$, die sich aus dem Hilfskanal G ergeben, verwendet.

Fig. 3 zeigt beispielhaft für den Summenkanal $S_n$ ein stark vereinfacht dargestelltes Frequenzspektrum in einer HPRF-Situation mit einem clutterfreien Bereich M. Der Summenkanal $S_n$ ist dabei über die abgetastete Dopplerfrequenz mit der Pulsrepetitionsfrequenz PRF als Eindeutigkeitsbereich dargestellt. Außerdem ist der Bereich des Sidelobe-Clutters und des Hauptkeulenclutters, auch als Main Beam Clutter bezeichnet, zu erkennen.

Der Vorteil hierbei ist, dass nach der FFT die Signale im Frequenzbereich vorliegen und somit der Bereich der Clutter-Signale ohne aufwendige Filter, z. B. elliptische Clutter-Filter herausgeschnitten werden kann.

Die Radarantenne empfängt Signale bekanntlich in einer zeitlichen Abfolge. Somit seien $s_k$, $d_k$ und $g_k$ die Signalfolgen von Abtastwerten des Summen-, Differenz- und Hilfskanals im Zeitbereich. Mittels FFT können diese Signalfolgen aus dem Zeitbereich in den Frequenzbereich transformiert werden, wobei $S_n$, $D_n$ und $G_n$ die Abtastwerte des Summen-, Differenz- und Hilfskanals im Frequenzbereich seien, mit n=0, 1, 2, 3.... N-1. Diese FFT wird auch als N-Punkte-FFT bezeichnet, wobei gilt:

$$S_n = FFT\{s_k\} \,, \ D_n = FFT\{d_k\} \,, \ G_n = FFT\{g_k\}.$$

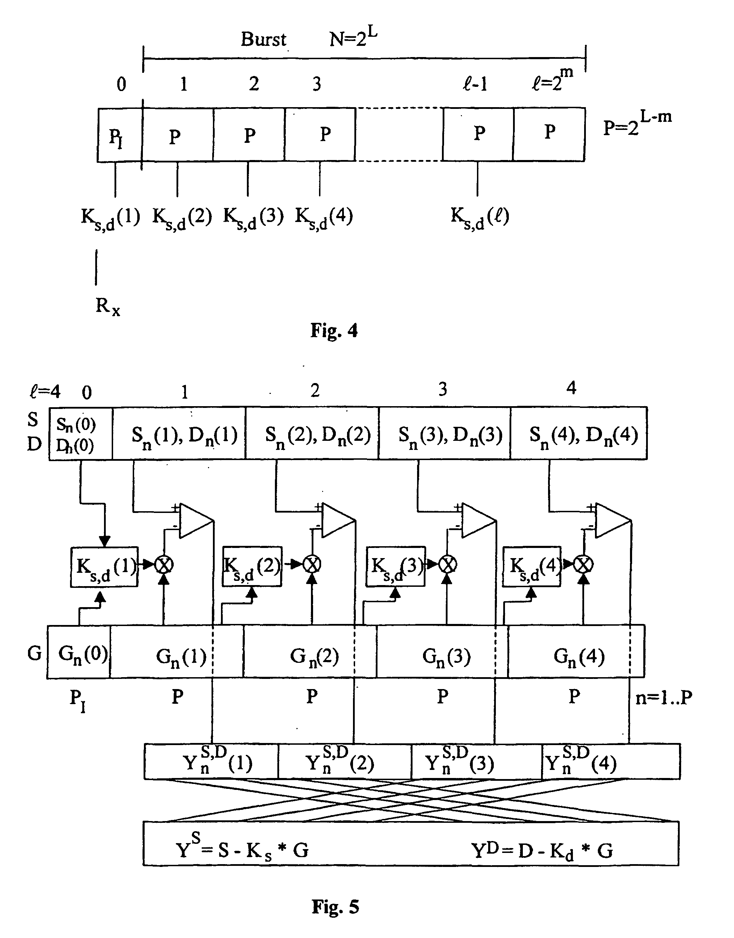

Die FFT wird vorteilhaft in einem sogenannten Burst durchgeführt (Fig. 4). Ein Burst umfaßt dabei N Abtastwerte mit $N = 2^L$ und $L \in |N$. Der Burst wird dabei vorteilhaft in $\ell$ Sub-Bursts unterteilt mit $\ell = 2^m$ und $m \in \{0, 1, 2, 3, 4\}$ der Länge P unterteilt. Die Länge P der einzelnen Sub-Bursts berechnet sich aus $P := N/\ell = 2^{L-m}$. Dabei sind N, $\ell$ und P insbesondere eine Potenz von 2.

Es ist damit möglich, die im Zeitbereich vorliegenden Signalfolgen im Summen-, Differenz- und Hilfskanal in einem einfachen und schnellen FFT-Verfahren in den Frequenzbereich zu transformieren. Dies läßt sich insbesondere dadurch verwirklichen, dass pro Burst insgesamt $\ell$ FFTs der Länge P durchgeführt werden. Diese Vorgehensweise wird auch als "Decimation in Time FFT" bezeichnet.

Dies bedeutet also, innerhalb der einzelnen Sub-Bursts liegen die Abtastwerte im Frequenzbereich vor. Die Sub-Bursts unterliegen allerdings ihrerseits innerhalb des übergeordneten Bursts einer zeitlichen Abfolge.

In einer vorteilhaften Ausführung der Erfindung erfolgt die Unterdrückung des Sidelobe-Jammers in den einzelnen Sub-Bursts i mit i=1...$\ell$ mittels Sidelobe-Cancellation, wobei in jedem Sub-Burst i folgende Berechnungen durchgeführt werden:

$$Y_n^S(i) = S_n(i) - K_s(i) \ast G_n(i)$$

für den Summenkanal und

$$Y_n^D(i) = D_n(i) - K_d(i) \ast G_n(i)$$

für den Differenzkanal.

Dabei sind, wie oben bereits beschrieben, $S_n(i)$, $D_n(i)$, $G_n(i)$ die Abtastwerte n = 0, 1, 2, .... N-1 des Summen-, Differenz- und Hilfskanals im Frequenzbereich und i=1...P die Sub-Bursts. Mit $K_s(i)$ und $K_d(i)$ sind die Skalierungsfaktoren für den Summen- und Differenzkanal des Sub-Bursts i bezeichnet.

Die Koeffizienten $K_s$ und $K_d$ sind nur für einen ganz bestimmten Zeitbereich stationär. Aufgrund des wiederholten Scannens der Radarantenne, ändern sich allerdings die Gegebenheiten für die Koeffizienten $K_s$ und $K_d$. Somit müssen die Koeffizienten ständig angepaßt werden. Eine derartige Anpassung kann auch während der FFT erforderlich sein.

Die einzelnen Sub-Bursts i mit i=1...$\ell$, wobei $\ell$ Sub-Bursts einen Burst ergeben, unterliegen, wie bereits oben erwähnt, einer zeitlichen Abfolge (Fig. 4), wohingegen die Abtastwerte innerhalb der Sub-Bursts im Frequenzbereich vorliegen. Die Skalierungsfaktoren $K_s(i+1)$ und $K_d(i+1)$ werden vorteilhaft in einem Sub-Burst i mit i=1...$\ell$-1 bestimmt und für die Unterdrückung des Sidelobe-Jammers im zeitlich direkt darauffolgenden Sub-Burst i+1 mit i=1...$\ell$-1 angewendet (Fig. 5). Die Berechnung der Skalierungsfaktoren für die Sub-Bursts i+1 mit i=1...$\ell$-1 erfolgt vorteilhaft gemäß folgender Vorschrift:

$$K_s(i+1) = \frac{\sum_{n \in M} S_n(i) \cdot G_n^{\bullet}(i)}{\sum_{n \in M} G_n(i) \cdot G_n^{\bullet}(i)}$$

und

$$K_d(i+1) = \frac{\sum_{n \in M} D_n(i) \cdot G_n^{\bullet}(i)}{\sum_{n \in M} G_n(i) \cdot G_n^{\bullet}(i)}$$

mit i = 1....$\ell$-1.

M bezeichnet dabei die Menge der Doppler-Bins, die nicht mit Clutter belegt sind.

$G_n^*(i)$ bezeichnet die konjugiert komplexen Abtastwerte des entsprechenden Hilfskanals $G_n(i)$.

Zur Bestimmung der Skalierungsfaktoren $K_s(1)$ und $K_d(1)$, welche zur Unterdrückung des Sidelobe-Jammers im ersten Sub-Burst i=1 verwendet werden, wird vorteilhaft eine Initialisierungsphase durchgeführt. Die Länge $P_I$ dieser Initialisierungsphase ist vorteilhaft kleiner als die Länge P der einzelnen Sub-Bursts i. Vorteilhaft berechnen sich die Skalierungsfaktoren $K_s(1)$ und $K_d(1)$ gemäß folgender Vorschrift:

$$K_s(1) = \frac{\sum\limits_{n \in M} S_n(0) \cdot G_n^*(0)}{\sum\limits_{n \in M} G_n(0) \cdot G_n^*(0)}$$

$$K_d(1) = \frac{\sum\limits_{n \in M} D_n(0) \cdot G_n^*(0)}{\sum\limits_{n \in M} G_n(0) \cdot G_n^*(0)} \cdot$$

Bevorzugt werden die Skalierungsfaktoren $K_s(1)$ und $K_d(1)$ direkt nach Einschalten des Empfängers $R_x$ berechnet. In der weiteren Signalverarbeitung werden die Daten der Initialisierungsphase nicht benötigt.

Fig. 5 zeigt beispielhaft für einen in 4 Sub-Bursts unterteilten Burst, also $\ell$=4, den Ablauf eines sogenannten adaptiven Processings. Die in einer Initialisierungsphase $P_I$ ermittelten Skalierungsfaktoren $K_{s,d}(1)$ werden im ersten Sub-Burst $\ell$=1 zur Berechnung von $Y_n^S(1)$ und $Y_n^D(1)$ verwendet. Die Berechnung von $Y_n^S(1)$ und $Y_n^D(1)$ für den Summen- und Differenzkanal erfolgt wie oben bereits beschrieben gemäß folgender Vorschrift:

$$Y_n^S(1) = S_n(1) - K_s(1) * G_n(1)$$

$$Y_n^D(1) = D_n(1) - K_d(1) * G_n(1)$$

Anschließend erfolgt im ersten Sub-Burst die Bestimmung der Skalierungsfaktoren $K_{s,d}(2)$, also die Skalierungsfaktoren für den zeitlich direkt darauffolgenden zweiten Sub-Burst mit $\ell$=2. Das sich darin anschließende Verfahren im zweiten Sub-Burst entspricht im wesentlichen dem bereits beschriebenen Verfahren im ersten Sub-Burst.

Die in den vier Sub-Bursts berechneten Einzeldaten $Y_n^{S,D}(1)$ bis $Y_n^{S,D}(4)$ des Summen- und Differenzkanals werden vorteilhaft zu einem Endwert $Y_n^S$ und $Y_n^D$ für den entsprechenden Burst zusammengefaßt. Die Zusammenfassung der Einzeldaten der einzelnen Sub-Bursts erfolgt mittels entsprechender Twiddle-Faktoren [2].

**Literatur**

[1] S.P. Applebaum, "*Adaptive Array*", IEEE Transactions of Antenna and Propagation, Vol. AP-24, No.5, Sept. 1976

[2] L.R. Rabiner und B. Gold, "*Theory and Application of Digital Signal Processing*", Prentice Hall, Inc. Englewood Cliffs, New Jersey, 1975, S.363 und 574

**Patentansprüche**

1. Verfahren zur Unterdrückung von Jammer-Signalen im Empfangssignal von Radarantennen von HPRF-Anwendungen, insbesondere Pulsdopplerradarsystemen, mittels Fast Fourier Transformation (FFT) und Sidelobe Cancellation, wobei die Radarantenne einen Summen- (S), Differenz- (D) und Hilfskanal (G) umfaßt, **dadurch gekennzeichnet, dass** das Empfangssignal zunächst im Summen- (S), Differenz-(D) und Hilfskanal (G) in einer Fast Fourier Transformation (FFT) vom Zeitbereich in den Frequenzbereich transformiert und anschließend im Frequenzbereich das Jammer-Signal, insbesondere der Sidelobe-Jammer, mittels Sidelobe Cancellation (5c) unterdrückt wird.

2. Verfahren nach Anspruch 1, **dadurch gekennzeichnet, dass** nach der FFT zur Eliminierung von Clutter-Signalen der Frequenzbereich $\pm 2V_r/\lambda$, mit $V_r$ der Geschwindigkeit der HPRF-Anwendung und mit $\lambda$ der Wellenlänge des Empfangssignals, aus dem Frequenzspektrum des Empfangssignal herausgeschnitten wird.

3. Verfahren nach einem der vorangehenden Ansprüche, **dadurch gekennzeichnet, dass** die Fast Fourier Transformation in einem Burst umfassend N Abtastwerte mit $N = 2^L$ und $L \in |N$ erfolgt, wobei der Burst in $\ell$ Sub-Bursts mit $\ell = 2^m$ und $m \in \{0, 1, 2, 3, 4\}$ der Länge P unterteilt ist.

4. Verfahren nach Anspruch 3, **dadurch gekennzeichnet, dass** zur Unterdrückung des Sidelobe-Jammers mittels Sidelobe-Cancellation in den einzelnen Sub-Burts i mit $i=1...\ell$ die Berechnung

$$Y_n^S(i) = S_n(i) - K_s(i) * G_n(i)$$

für den Summenkanal (S) und

$$Y_n^D(i) = D_n(i) - K_d(i) * G_n(i)$$

für den Differenzkanal (D) erfolgt, mit

$S_n(i)$, $D_n(i)$, $G_n(i)$ : Abtastwerte des Summen-(S), Differenz-(D) und Hilfskanals (G) im Frequenzbereich für den Sub-Burst i,

n = 0, 1, 2, ... N-1,

$K_s(i)$, $K_d(i)$ : Skalierungsfaktoren für den Sub-Burst i+1.

**5.** Verfahren nach Anspruch 4, **dadurch gekennzeichnet, dass** in einem Sub-Burst i mit i=1...$\ell$-1 die entsprechenden Skalierungsfaktoren $K_s(i)$ und $K_d(i)$ bestimmt werden, wobei die berechneten Skalierungsfaktoren für die Eliminierung des Sidelobe-Jammers im zeitlich direkt darauffolgenden Sub-Burst i+1 mit i=1...$\ell$-1 angewendet werden und wobei die Berechnung der Skalierungsfaktoren für die Sub-Bursts i mit i=1...$\ell$-1 folgendermaßen erfolgt:

$$K_s(i+1) = \frac{\sum_{n \in M} S_n(i) \cdot G_n^*(i)}{\sum_{n \in M} G_n(i) \cdot G_n^*(i)}$$

und

$$K_d(i+1) = \frac{\sum_{n \in M} D_n(i) \cdot G_n^*(i)}{\sum_{n \in M} G_n(i) \cdot G_n^*(i)}$$

mit i = 1,..., $\ell$-1,

M : Clutterfreier Signalbereich

**6.** Verfahren nach Anspruch 5, **dadurch gekennzeichnet, dass** zur Bestimmung der Skalierungsfaktoren $K_s(1)$ und $K_d(1)$ des Sub-Bursts i = 1 eine Initialisierungsphase durchgeführt wird, dessen Länge $P_l$ kleiner als P ist und wobei in der Initialisierungsphase die Skalierungsfaktoren $K_s(1)$ und $K_d(1)$ folgendermaßen berechnet werden:

$$K_s(1) = \frac{\sum_{n \in M} S_n(0) \cdot G_n^*(0)}{\sum_{n \in M} G_n(0) \cdot G_n^*(0)}$$

$$K_d(1) = \frac{\sum_{n \in M} D_n(0) \cdot G_n^*(0)}{\sum_{n \in M} G_n(0) \cdot G_n^*(0)}$$

**7.** Verfahren nach einem der vorangehenden Ansprüche, **dadurch gekennzeichnet, dass** die in den einzelnen Sub-Bursts i berechneten Einzeldaten

$Y_n^S(i)$ und $Y_n^D(i)$ des Summen-(S) und Differenzkanals (D) zu einem Endwert $Y_n^S$ und $Y_n^D$ des Summen-(S) und Differenzkanals (D) für den entsprechenden Burst zusammengefaßt werden.

## Claims

**1.** Method for suppression of jammer signals in the received signal from radar antennas in HPRF applications, in particular pulse-Doppler radar systems, by means of Fast Fourier Transformation (FFT) and sidelobe cancellation, with the radar antenna having a sum (S), difference (D) and auxiliary channel (G), **characterized in that** the received signal is first of all transformed from the time domain to the frequency domain in a Fast Fourier Transformation (FFT) in the sum (S), difference (D) and auxiliary channel (G), and the jammer signal, in particular the sidelobe jammer, is then suppressed by means of sidelobe cancellation (SC) in the frequency domain.

**2.** Method according to Claim 1, **characterized in that,** after the FFT, the frequency range $\pm 2V_r/\lambda$; where $V_r$ is the speed of the HPRF application and $\lambda$ is the wavelength of the received signal, is cut out of the frequency spectrum of the received signal in order to eliminate clutter signals.

**3.** Method according to one of the preceding claims, **characterized in that** the Fast Fourier Transformation is carried out in a burst comprising N sample values where $N=2^L$ and LE|N, with the burst being subdivided into $\ell$ sub-bursts where $\ell=2^m$ and mE {0,1,2,3,4} of length P.

**4.** Method according to Claim 3, **characterized in that**, in order to suppress the sidelobe jammer by means of sidelobe cancellation in the individual sub-bursts i where i=1...$\ell$, the calculation $Y_n^s(i)=S_n(i)-K_s(i)*G_n(i)$ is carried out for the sum channel (S), and $Y_n^D(i)=D_n(i)-K_d(i)*G_n(i)$ is carried out for the difference channel (D), where $S_n(i), D_n(i), G_n(i)$: sample values of the sum (S), difference (D) and auxiliary channel (G) in the frequency domain of the sub-burst i, n=0,1,2,...N-1, $K_s(i), K_d(i)$: scaling factors for the sub-burst i+1.

**5.** Method according to Claim 4, **characterized in that** the corresponding scaling factors $K_s(i)$ and $K_d(i)$ are determined in a sub-burst i where i=1...$\ell$-1, with the calculated scaling factors being used for the elimination of the sidelobe jammer in the directly successive sub-burst i+1 where i=1...$\ell$-1 and with the calculation of the scaling factors for the sub-bursts i where i=1...$\ell$-1 being carried out as follows:

$$K_s(i+1) = \frac{\sum_{n \in M} S_n(i) \cdot G_n^*(i)}{\sum_{n \in M} G_n(i) \cdot G_n^*(i)}$$

and

$$K_d(i+1) = \frac{\sum_{n \in M} D_n(i) \cdot G_n^*(i)}{\sum_{n \in M} G_n(i) \cdot G_n^*(i)}$$

where i = 1,...,$\ell$-1,
M: clutter-free signal range

6. Method according to Claim 5, **characterized in that** an initialization phase is carried out in order to determine the scaling factors $K_s(1)$ and $K_d(1)$ for the sub-burst i=1, the length $P_i$ of which initialization phase is shorter than P, and with the scaling factors $K_s(1)$ and $K_d(1)$ being calculated as follows in the initialization phase:

$$K_s(1) = \frac{\sum_{n \in M} S_n(0) \cdot G_n^*(0)}{\sum_{n \in M} G_n(0) \cdot G_n^*(0)}$$

$$K_d(1) = \frac{\sum_{n \in M} D_n(0) \cdot G_n^*(0)}{\sum_{n \in M} G_n(0) \cdot G_n^*(0)}$$

7. Method according to one of the preceding claims, **characterized in that** the individual data items $Y_n^S$ (i) and $Y_n^D$ (i), which are calculated in the individual sub-bursts i, for the sum (S) and difference channel (D) are combined to form a final value $Y_n^S$ and $Y_n^D$ for the sum (S) and difference channel (D) for the corresponding burst.

**Revendications**

1. Procédé de suppression de signaux de brouillage dans le signal de réception d'antennes radar d'applications HPRF, en particulier de systèmes radar Doppler pulsé, au moyen d'une transformation de Fourier rapide (FFT) et d'une suppression du lobe secondaire, dans lequel l'antenne radar comprend un canal de sommation (S), un canal de différence (D) et un canal auxiliaire (G), **caractérisé en ce que** le signal de réception est d'abord transformé dans le canal de sommation (S), le canal de différence (D) et le canal auxiliaire (G) dans une transformation de Fourier rapide (FFT) du domaine temporel au domaine fréquentiel, et ensuite, le signal de brouillage, en particulier le brouillage de lobe secondaire, est supprimé dans le domaine fréquentiel par suppression du lobe secondaire (SC).

2. Procédé selon la revendication 1, **caractérisé en ce qu'**après la FFT, pour éliminer des signaux parasites, le domaine fréquentiel $\pm 2V_r/\lambda$, où $V_r$ est la vitesse de l'application HPRF et $\lambda$ est la longueur d'onde du signal de réception, est découpé du spectre de fréquences du signal de réception.

3. Procédé selon l'une quelconque des revendications précédentes, **caractérisé en ce que** la transformation de Fourier rapide s'effectue dans une rafale comprenant N valeurs d'échantillonnage, où $N = 2^L$ et L e |N, la rafale étant divisée en $\ell$ sous-rafales, où $\ell = 2^m$ et m $\varepsilon$\{0, 1, 2, 3, 4\} de longueur P.

4. Procédé selon la revendication 3, **caractérisé en ce que** pour supprimer le brouillage de lobe secondaire au moyen d'une suppression du lobe secondaire dans les sous-rafales individuelles i, où i = 1 ... $\ell$, le calcul
$Y_n^S(i) = S_n(i) - K_s(i) * G_n(i)$ pour le canal de sommation (S) et
$Y_n^D(i) = D_n(i) - K_d(i) * G_n(i)$ pour le canal de différence (D)
est effectué, où
$S_n(i)$, $D_n(i)$, $G_n(i)$ : valeurs d'échantillonnage du canal de sommation (S), du canal de différence (D) et du canal auxiliaire (G) dans la gamme d'ondes pour la sous-rafale i,
n = 0, 1, 2, ... N-1.
$K_s(i)$, $K_d(i)$ : facteurs d'échelle pour la sous-rafale i+1.

5. Procédé selon la revendication 4, **caractérisé en ce que** dans une sous-rafale i, où i = 1 ... $\ell$-1, les facteurs d'échelle correspondants $K_s(i)$ et $K_d(i)$ sont déterminés, les facteurs d'échelle calculés étant appliqués pour l'élimination du brouillage de lobe secondaire dans la sous-rafale i+1, où i = 1 ... $\ell$-1, immédiatement consécutive dans le temps, et le calcul des facteurs d'échelle s'effectuant pour les sous-rafales i, où i = 1 ... $\ell$-1, de la manière suivante :

$$K_s(i + 1) = \frac{\displaystyle\sum_{n \in M} S_n(i) \cdot G_n^o(i)}{\displaystyle\sum_{n \in M} G_n(i) \cdot G_n^o(i)}$$

et

$$K_d(i + 1) = \frac{\displaystyle\sum_{n \in M} D_n(i) \cdot G_n^o(i)}{\displaystyle\sum_{n \in M} G_n(i) \cdot G_n^o(i)}$$

où i = 1, ... $\ell$-1,
M : domaine de signal sans parasites.

6. Procédé selon la revendication 5, **caractérisé en ce que** pour la détermination des facteurs d'échelle $K_s(1)$ et $K_d(1)$ de la sous-rafale i = 1, une phase d'initialisation est exécutée dont la longueur $P_1$ est inférieure à P, et dans lequel dans la phase d'initialisation, les facteurs d'échelle $K_s(1)$ et $K_d(1)$ sont calculés de la manière suivante :

$$K_s(1) = \frac{\displaystyle\sum_{n \in M} S_n(0) \cdot G_n^o(0)}{\displaystyle\sum_{n \in M} G_n(0) \cdot G_n^o(0)}$$

$$K_d(1) = \frac{\displaystyle\sum_{n \in M} D_n(0) \cdot G_n^o(0)}{\displaystyle\sum_{n \in M} G_n(0) \cdot G_n^o(0)}$$

7. Procédé selon l'une quelconque des revendications précédentes, **caractérisé en ce que** les i données individuelles $Y_n^S(i)$ et $Y_n^D(i)$, calculées dans les sous-rafales individuelles, du canal de sommation (S) et du canal de différence (D) sont regroupées en une valeur définitive $Y_n^S$ et $Y_n^D$ du canal de sommation (S) et du canal de différence (D) pour la rafale correspondante.

**Fig. 1**

**Fig. 2**

**Fig. 3**

Burst    $N=2^L$

| 0 | 1 | 2 | 3 | | $\ell-1$ | $\ell=2^m$ |
|---|---|---|---|---|---|---|
| $P_I$ | P | P | P | | P | P |

$P=2^{L-m}$

$K_{s,d}(1)$    $K_{s,d}(2)$    $K_{s,d}(3)$    $K_{s,d}(4)$         $K_{s,d}(\ell)$

$R_x$

**Fig. 4**

$\ell=4$    0         1         2         3         4

| S | $S_n(0)$ | $S_n(1), D_n(1)$ | $S_n(2), D_n(2)$ | $S_n(3), D_n(3)$ | $S_n(4), D_n(4)$ |
|---|---|---|---|---|---|
| D | $D_n(0)$ | | | | |

$K_{s,d}(1)$    $K_{s,d}(2)$    $K_{s,d}(3)$    $K_{s,d}(4)$

| G | $G_n(0)$ | $G_n(1)$ | $G_n(2)$ | $G_n(3)$ | $G_n(4)$ |
|---|---|---|---|---|---|

$P_I$    P         P         P         P         $n=1..P$

| $Y_n^{S,D}(1)$ | $Y_n^{S,D}(2)$ | $Y_n^{S,D}(3)$ | $Y_n^{S,D}(4)$ |
|---|---|---|---|

$Y^S = S - K_s * G$         $Y^D = D - K_d * G$

**Fig. 5**